# EUROPEAN PATENT SPECIFICATION

(11) **EP 0 388 148 B1**
(45) Date of publication and mention of the grant of the patent: **27.08.1997**
(21) Application number: 90302662.3
(22) Date of filing: 13.03.1990
(51) Int. Cl.: G06F 17/28, G06F 9/44

(54) **A multi-language conversion system**
Übersetzungssystem von mehreren Sprachen
Système de traduction d'une pluralité de langages

(30) Priority: 13.03.1989 JP 60076/89
(43) Date of publication of application: 19.09.1990
(73) Proprietor: FUJITSU LIMITED, Kawasaki-shi, Kanagawa 211 (JP)
(72) Inventor: Nagashima, Hironobu, Mishima-shi, Shizuoka 411 (JP)
(74) Representative: Fane, Christopher Robin King

(56) References cited:
- EP-A- 0 121 071
- EP-A- 0 150 273
- DE-A- 3 129 011
- GB-A- 2 131 583

## Description

The present invention relates to multi-language conversion apparatus for use in data processing apparatus which executes a data processing program, for converting expressions in such a program into corresponding expressions in a designated language, the converted data being then displayed on a display medium for example. More particularly, the invention relates to multi-language conversion apparatus for use in such data processing apparatus that can deal simply and adequately with new subject data (expressions) for conversion when the functions of the data processing program are expanded.

A data processing apparatus may be provided with a multi-language conversion system for displaying data described in a program in a desired language. Such a system can be advantageous when the data processing apparatus is used in a country other than the one in which it is manufactured. Sometimes, such data processing apparatus is subjected to sequential program upgradings. In such a situation, in order for the multi-language conversion system to continue to operate satisfactorily the data of a new subject for conversion must be added to reflect the expanded function of the program and it is necessary to provide a means by which such data can be added simply and adequately.

A known example of multi-language conversion apparatus, for converting a received expression in an input language into a corresponding expression in a designated one of a plurality of available output languages, may be considered to include:
multi-language conversion table means having a keyboard module for storing a plurality of input-language expressions in a predetermined sequence, and also having, for each available output language, a data module for storing a plurality of expressions in the output language concerned, the order assigned to the expressions in the data module corresponding to the said predetermined sequence so that each input-language expression in the keyword module is associated with a corresponding output-language expression in the data module; language selection means for selecting that one of the data modules which relates to the designated output language; and conversion means operable to determine whether or not the said received expression matches any of the input-language expressions stored in the said keyword module and, if so, to retrieve from the selected data module that one of the output-language expressions which corresponds to the input-language expression concerned.

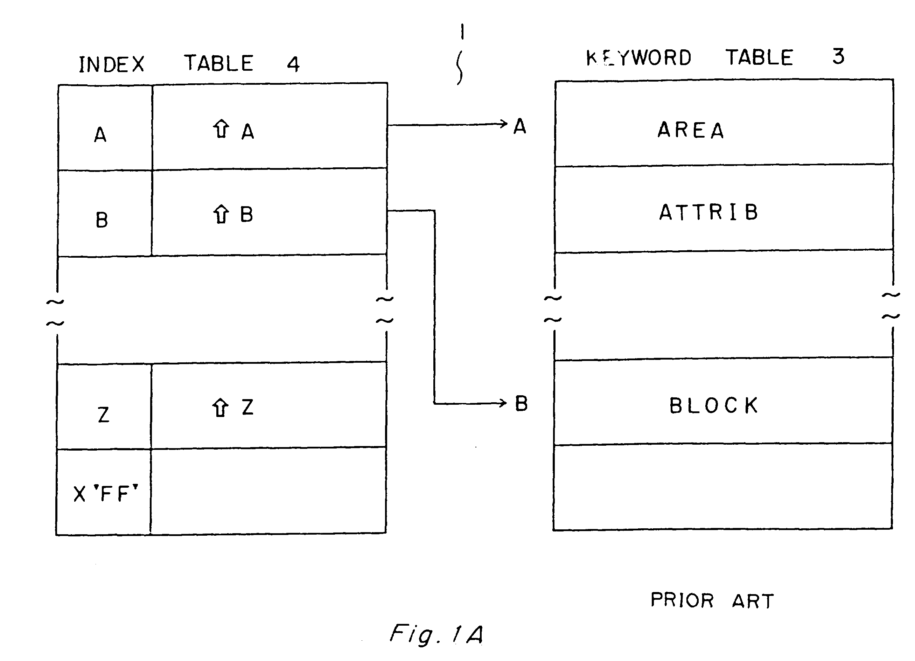

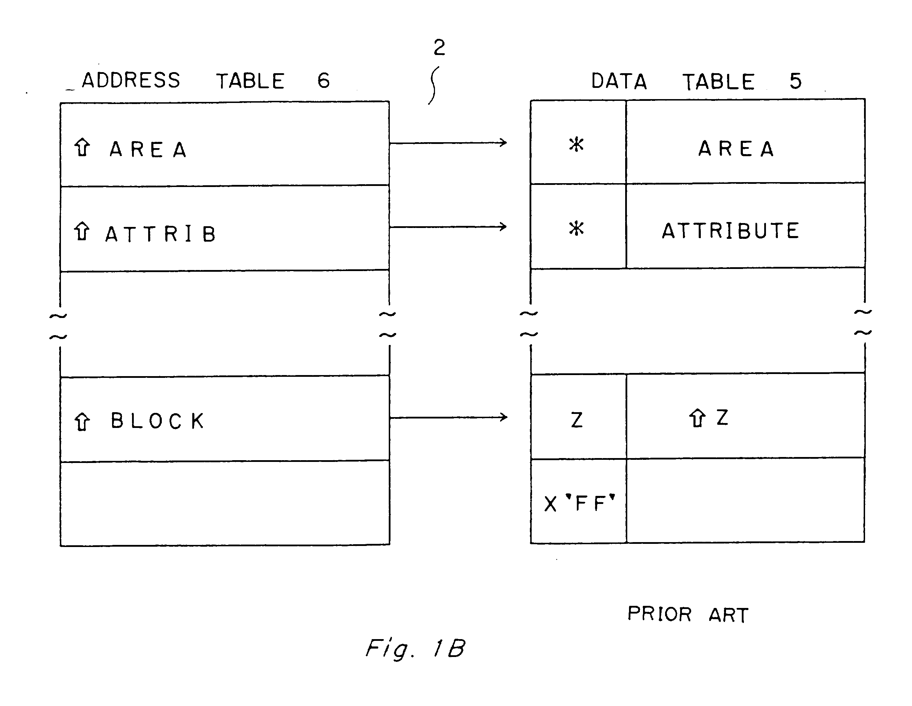

In order to implement such a multi-language processing system, the input-language expressions or data (called keywords hereafter) which are subject to conversion are classified in accordance with a group of head characters. Thus, as shown in Figure 1A, it is necessary to provide a keyword module 1 comprising a keyword table 3 for storing lists of keywords having the same head character, the lists being arranged in ascending order (or descending order) of head character, and an index table 4 for use in determining the head position of each list. It is also necessary to provide a data module 2 comprising a data table 5 for storing the expressions (the converted data, expressed in a designated output language, corresponding to the keywords), in the same sequence as the keywords are stored in keyword table 3. Also provided is an address table 6 for processing the data corresponding to data table 5, as shown in Fig. 1B. The data table is for the Japanese language in this example, and the data length information is stored in an area designated by (*).

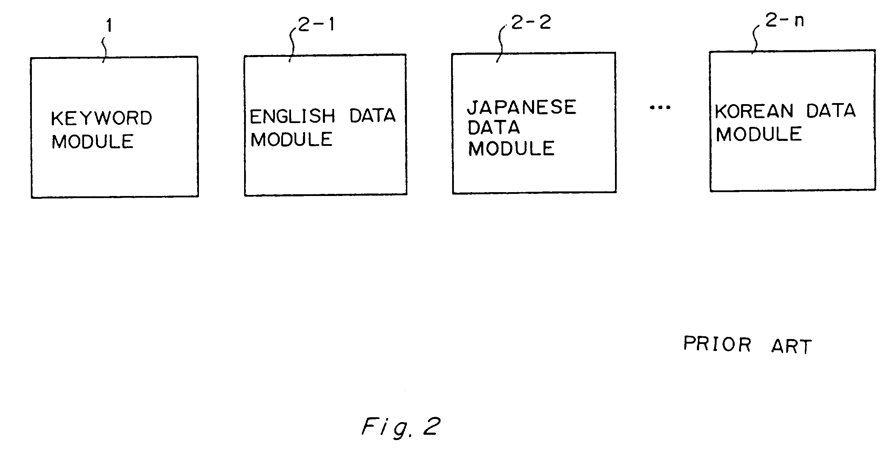

In prior art multi-language conversion processing systems, the keyword module 1 is formed and managed so that it is incorporated in a portion of a data conversion structure unit and carries out data conversion in accordance with a format applied to all the data modules 2 provided for the different output languages. Thus, as shown in Fig. 2, keyword module 1 is constructed and stored in a format such that it is common to each of the data modules 2 provided for the different output languages. The keywords in keyword table 3 are stored in the same order as the pointers to the corresponding data (i.e. the storage addresses in data table 5) are stored in address table 6.

EP-A-0121071 discloses a data processing system in which concurrent multi-lingual use by a plurality of users having different national languages is possible. In this system, a message identifier primary key is also common for all languages.

Therefore, according to the structure of the prior art, where a keyword of a new subject for conversion is added to the keyword module, it is necessary to update data module 2 prepared for a language so that it corresponds to the added keyword in keyword module 1. If data module 2 is not updated, it does not comply with the sequential order of the keywords of keyword module 1, and thus returns wrong corresponding data. Further, an abnormal program end may result, causing failure to return the corresponding data. However, simultaneous execution of the updating process for all the data modules 2 creates an extremely large load.

Therefore, in order to guarantee a normal conversion process for keywords other than the added keyword, that is, to guarantee the normal keyword conversion process for keywords stored up to the time of addition of a new keyword, a new keyword to be added is appended to the last portion of keyword table 3. For example, as explained by the example shown in Fig. 1A, the keyword to be added is entered into the list for head character "Z", and keyword module 1 and data module 2 are updated.

However, if the "appending" method described above is used, a new keyword which does not have "Z" as its head character has to be changed to a word starting with "Z", such as "Z·COPY". This causes the problem that a keyword with a nonsensical meaning must be added. Further, the number of keywords belonging to the "Z" group (list) becomes progressively greater. Thus, these keywords generally have a lower conversion capability than those belonging to other groups (lists).

According to the present invention the multi-language conversion table means have a conversion table unit for each of the said available output languages, each such table unit including: a keyword module for storing such input-language expressions in such a predetermined sequence; the said data module for the output language concerned, the order assigned to the output-language expressions stored therein corresponding to the predetermined sequence of the input-language expressions in the keyword module of the table unit concerned; and a default data portion for storing predetermined default data; the said language selection means being operable to select that one of the table units which relates to the designated output language; and the said conversion means being operable to determine whether or not the said received expression matches any of the input-language expressions stored in the keyword module of the selected table unit and, if so, to retrieve the corresponding output-language expression from the data module of the table unit concerned but, if no such match is found, to retrieve the said default data from the default data portion of the table unit concerned.

Such apparatus can effect a multi-language conversion process, for converting keywords recited in a data processing program to corresponding data in the designated language, in which new keywords can be added and the function of the program can be expanded simply and conveniently.

Reference will now be made, by way of example; to the accompanying drawings, in which:
Figures 1A and 1B, discussed hereinbefore, show an explanatory view of a keyword module and data module,
Figure 2, discussed hereinbefore, shows a conversion table structure used in a prior art multi-language conversion apparatus,
Figure 3 shows a block diagram for use in explaining a principle of the present invention,
Figure 4 shows a block diagram of an embodiment of the present invention,
Figure 5 shows examples of displays produced on a display screen in the Figure 4 embodiment,
Figure 6 shows a flowchart of a multi-language conversion process carried out by apparatus embodying the present invention,
Figures 7 and 8 show more detailed flowcharts of parts of the Fig. 6 process;
Figure 9A shows an example of an index table,
Figure 9B shows an example of a keyword table,
Figure 9C shows an example of an address table,
Figure 9D shows an example of a data table (Japanese), and
Figure 9E shows an example of a data table (English).

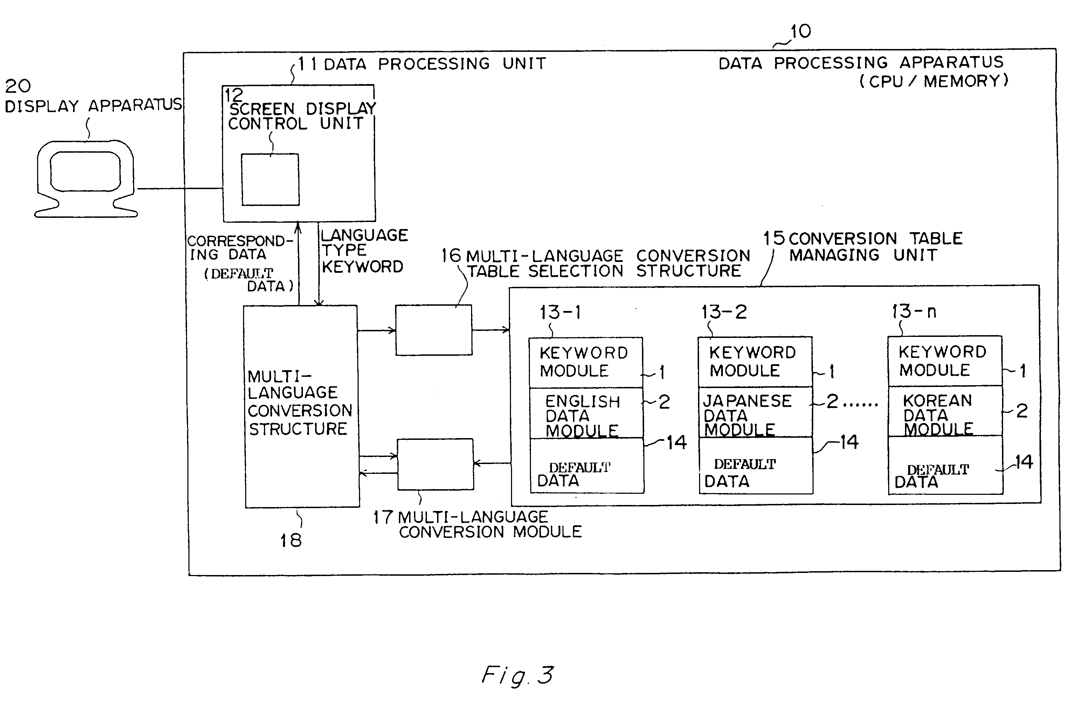

Figure 3 shows parts of multi-language conversion apparatus embodying the present invention. Keyword module 1 and data module 2 are explained by referring to Figures 1A and 1B. Data processing apparatus 10 includes multi-language conversion apparatus embodying the present invention. Display apparatus 20 represents a display screen and data processing unit 11 holds the processing program. Screen display control unit 12 is provided in data processing apparatus 10 and displays a keyword (conversion subject) described in the data processing program on the display screen. Multi-language conversion table 13 has table units 13-1, 13-2, ... 13-n for respective desired languages into which data is to be converted, each unit 13-i having its own keyword module 1 as well as its own data module 2 and also storing predetermined default data (default data) 14. Conversion table management unit 15 manages the plurality of prepared language conversion table units 13-i. Multi-language conversion table selection structure 16 selects the language conversion table unit 13-i relating to a particular language from the conversion table management unit 15 when the language to be used for the data conversion is designated. A multi-language conversion module 17 converts the keyword to the corresponding data expressed in the designated language using the selected language conversion table unit 13-i. If the multi-language conversion table 13 does not have any corresponding data for the keyword concerned, the default data 14 is provided instead of the corresponding data. Multi-language conversion structure 18 is activated by data processing unit 11 and controls a calling of multi-language conversion structure 16 and multi-language conversion module 17.

When data processing unit 11 displays a keyword in a data processing program using the corresponding data expressed in a predetermined language on the display screen, the language type and keyword (designated by a code) is provided to activate multi-language conversion structure 18. Multi-language conversion structure 18 then designates the provided language type to call multi-language conversion table selection structure 16. Multi-language conversion selection table selection structure 16 then reads the language conversion table unit 13-i for the language table designated by conversion table management unit 15, and selects this language conversion table unit as the one to be utilized by multi-language conversion module 17.

Following the above step, multi-language conversion structure 18 calls multi-language conversion module 17 by designating the provided keyword. Multi-language conversion module 17 then searches keyword module 1 of the selected language conversion table unit 13-i to detect the position in the sequence in which the particular designated keyword is stored and searches data module 2 in accordance with detection information to identify the corresponding data and return it to multi-language conversion structure 18 as response data. If the provided keyword is not found in keyword module 1, default data 14, such as blank, is returned to multi-language conversion structure 18 as the conversion data. Multi-language conversion structure 18 then returns the corresponding data, or the default data as the case may be, to data processing unit 11 as the response data. Screen display control unit 12 then displays this data on the display screen, thus completing the process.

Thus, as recited above, in apparatus embodying the present invention each language conversion table unit 13-i, storing the conversion relation between the keyword and the corresponding data, is provided with its own keyword module 1 and its own data module 2 for the language to which it relates, and default data 14 is returned, for example in the case of a conversion request specifying a new keyword which has not yet been added to the table unit concerned by an appropriate updating process. Therefore, the problem whereby an abnormal end of the program results because no corresponding data is returned is solved, and normal operation is guaranteed for all keywords stored in a table unit at any given time.

It also becomes possible to perform an updating of keyword module 1 and data module 2 separately for each individual language, so that adding a new keyword to an original position does not heavily burden the processing apparatus. Therefore, apparatus embodying the present invention can be extremely effective in situations in which the keyword cannot be changed (e.g. from "COPY" to "Z.COPY" as in the example given above) and the above-mentioned problem of a deterioration in the conversion capability of keywords having particular head characters (e.g. "Z") does not occur.

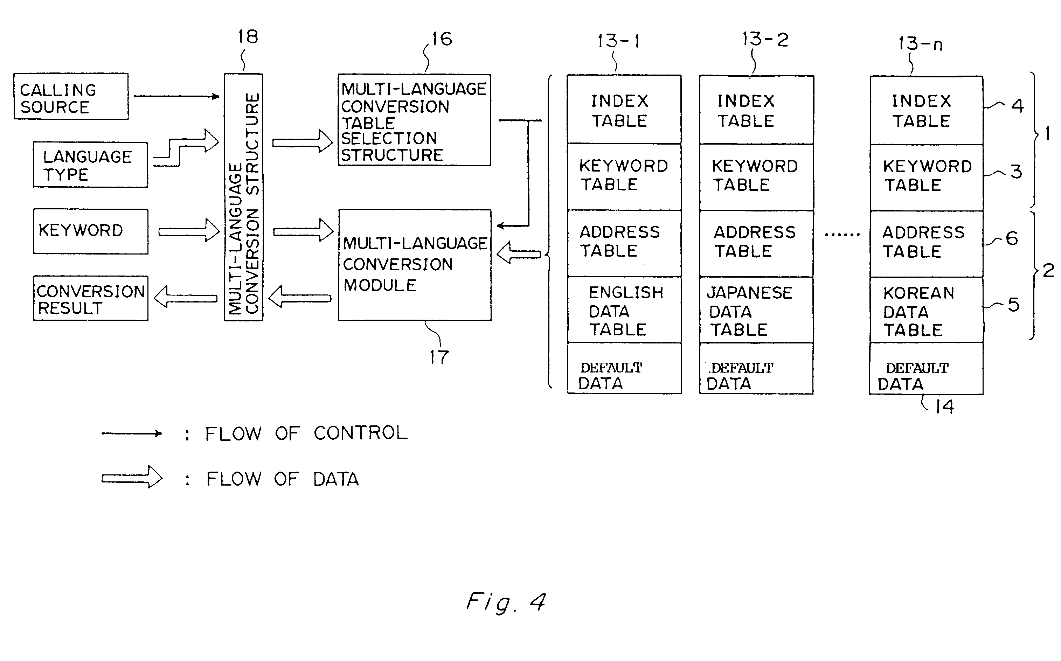

Figure 4 shows an embodiment of the present invention. Parts which are identical to those in Figure 3 are designated by the same reference numbers. The present invention features an integral provision of keyword module 1 and data module 2 necessary for implementing a multi-language conversion. Namely, language conversion table 13 for various languages is formed by providing in each table unit 13-1, 13-2, ..., 13-n a keyword module 1 integrally with data module 2, thereby providing an English language conversion sub-table 13-1, a Japanese language conversion sub-table 13-2, and a Korean language conversion sub-table 13-n. Language conversion table 13 thus comprises sub-tables, each corresponding to a specific language to be the subject of a conversion. The respective language conversion sub-tables also store predetermined default data 14, such as "blank" symbols.

Forming language conversion table 13 by integrating keyword module 1 with data module 2 does not mean that keyword module 1 is managed in a format such that it is incorporated in a part of the data conversion structure unit as in the prior art, but that the data conversion structure unit is completely separated from the data portion.

Each keyword module 1 provided in the respective language conversion sub-tables 13-x comprises, as in the prior art technology, a keyword table 3 for dividing the keywords into different lists according to their head characters, the keyword lists being stored in ascending order of head characters, and further comprises index table 4 having a list of pointers for pointing to the head position of the different keyword lists of keyword table 3.

Each data module 2 provided in the respective language conversion sub-tables 13-x stores the corresponding data in accordance with the order of the keywords in keyword module 1. As in the prior art, data module 2 comprises data table 5 storing the corresponding data in the same order as in keyword table 3 and further comprises address table 6 for pointing to the corresponding data in data table 5.

The advantage of the above structure of language conversion table 13 is explained below.

Whenever the functions of the application program (constituting a source for calling multi-language conversion structure 18) are expanded, a new keyword needs to be added to the table 13 to enable future conversion requests for that new keyword to be dealt with. In this case, a programmer adds the keyword to keyword module 1 in the language conversion sub-table 13-1, 13-2, ... for each respective language and the corresponding data is added to individual data modules 2. Namely, in each language conversion sub-table 13-1, 13-2, ..., a keyword module 1 is associated individually with a data module 2. Thus, it is unnecessary to simultaneously add new keyword information to the data modules 2 for all the provided language conversion sub-tables 13-1, 13-2, .... Thus, English language conversion sub-table 13-1 may be updated first and then Japanese language conversion sub-table 13-2 may be updated. All the data modules 2 have to be updated simultaneously in the prior art (Fig. 2). In contrast, in apparatus embodying the present invention, the respective data modules 2 of the individual language conversion sub-tables 13-1, 13-2, ... may be updated separately on a language-by-language basis. Thus, the burden of use is reduced and a new keyword can be added to the "original" storage position.

The keyword module 1 and data module 2 are integrated as an individual pair. Thus, when the language conversion table 13 is used whilst the updating process for adding a new keyword is unfinished, corresponding data will not always be available for return to the application program. Take for example the case in which the process of updating English language conversion sub-table 13-1 is ended but the process of updating Japanese language conversion sub-table 13-2 is not completed. In this case, if the Japanese language conversion sub-table 13-2 is used, no corresponding data can be returned to the application program. Thus, the program would complete abnormally. In order to deal with such problems, when a language conversion sub-table 13-x is requested to convert a keyword which is not found in its keyword module 1, default data 14 is returned to the application program in place of the corresponding data. Accordingly, default data 14, such as a blank, is displayed on a display screen and abnormal ending of the program is avoided.

The operation of the embodiment shown in Figure 4 is explained by referring to Figure 3 as described above. The application program (which acts as a source of the calling) displays the corresponding data of the keyword described in the program on the display medium. The language type and keyword is provided to activate multi-language conversion structure 18, which then calls a multi-language conversion table selection structure 16 by designating the provided language type. The multi-language conversion table selection structure 16 thus called reads language conversion sub-table 13-x of the designated language from among those in conversion table management unit 15, so that the selected language conversion sub-table is used by multi-language conversion module 17.

Next, multi-language conversion structure 18 calls multi-language conversion module 17 by designating the provided keyword. Multi-language conversion module 17 then searches keyword module 1 of the selected language conversion sub-table 13-x and detects the position of the designated keyword in the keyword sequence. Then, in accordance with the detection information, data module 2 is searched, and the corresponding data is determined and returned to multi-language conversion structure 18 as the response data. When the provided keyword does not exist in keyword module 1, the default data 14 is returned to multi-language conversion structure 18 as the conversion (response) data. Multi-language conversion structure 18 returns the corresponding data to data processing unit 11 as the response data and screen display control unit 12 displays the corresponding data thus received on the display screen, thereby completing the process.

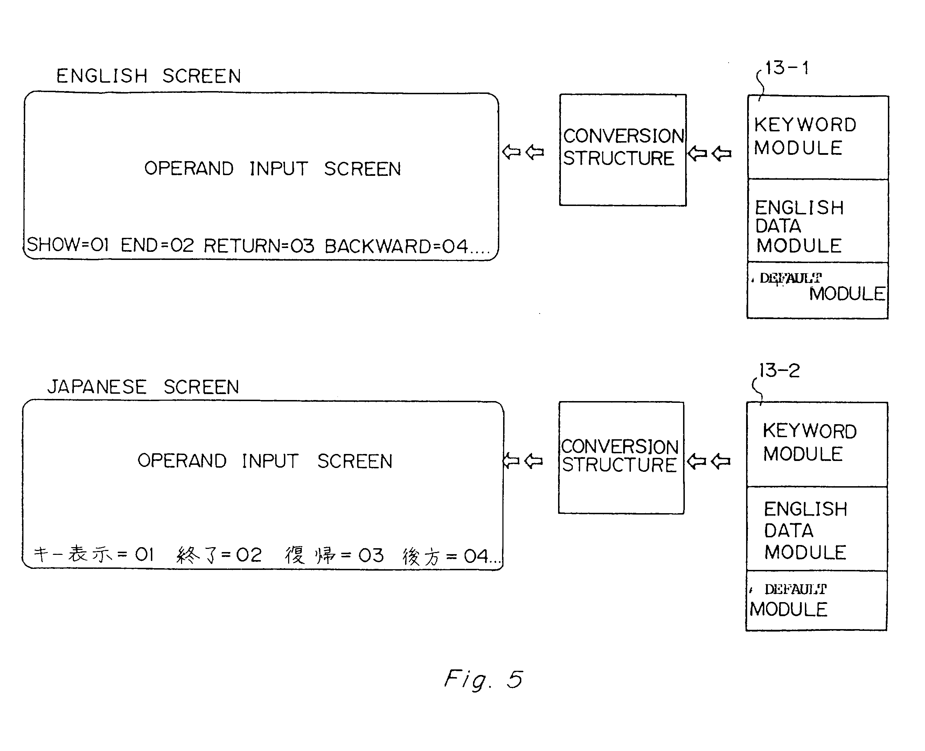

Figure 5 shows an example of a display of the display screen according to the present invention. As shown in Figure 5, when English language conversion sub-table 13-1 is used, the keyword to be displayed is displayed in English and when Japanese language conversion sub-table 13-2 is used, the keyword to be displayed is displayed in Japanese.

Next, the above recited respective processes will be explained in detail, these processes being carried out in a system using a computer.

In the embodiment of data processing apparatus 10 shown in Figure 3, the language conversion request is produced while the display request in display apparatus 20 is being carried out. The CPU then carries out a language conversion process, namely, a process for performing a multi-language conversion.

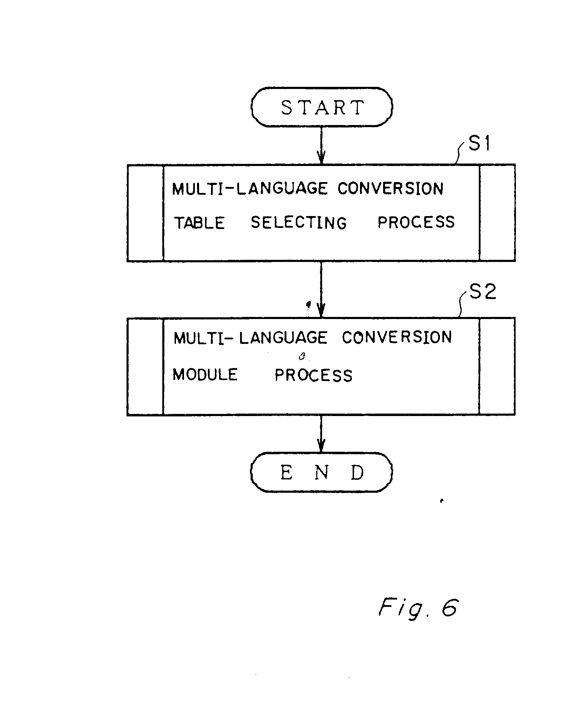

Figure 6 shows a flowchart of a multi-language conversion process. At first, multi-language conversion table selection process S1 selects the multi-language conversion sub-table of the designated language type and loads it into a predetermined storage area.

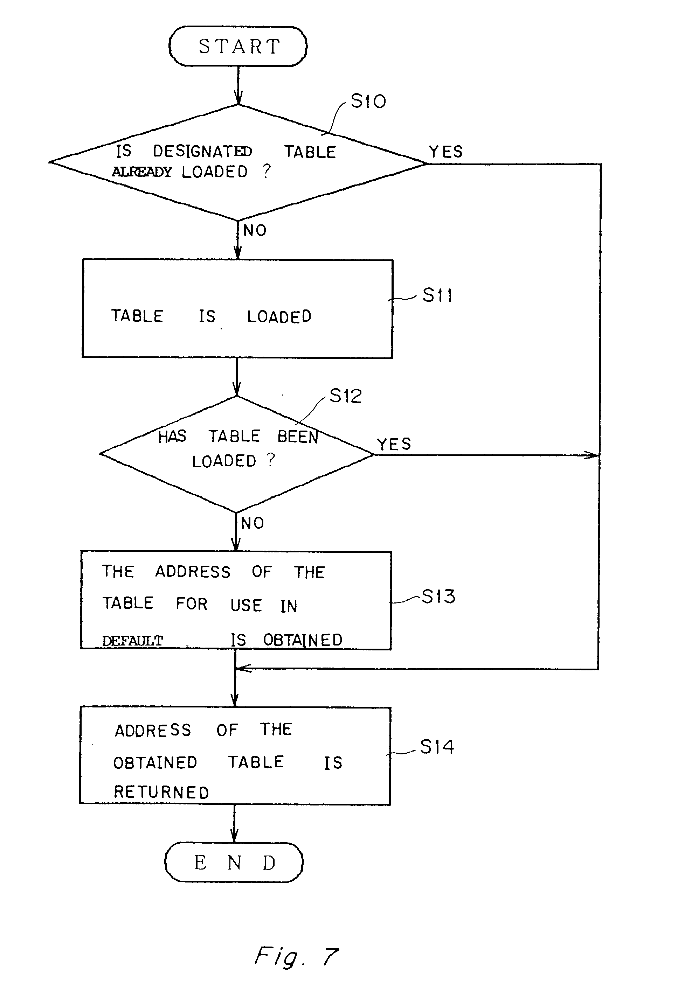

Figure 7 shows a detailed flowchart of the multi-language conversion table selection process S1. In the first step (S10) of the execution process, it is judged whether or not the designated table is already loaded. If it is not (NO), the process goes to load step (S11 ). Then it is judged at (S12) whether or not the table has been loaded. If it has not (NO), the address of the table holding default data is obtained (S13). If it is judged at step (S10) that the designated table was already loaded (YES), this means that the current conversion is being carried out using the same language as in the previous conversion and the required table is still loaded in the previously determined area. When the table is judged as being loaded at S12, this means that it is a newly-loaded table. When the judgments are YES at S10 and S12, the address of the obtained table is returned to the following routine at S14. The address of the obtained table is, for example, the load address of a predetermined area as it differs depending on the system. It is returned or provided to the next routine at S14. On the other hand, when the judgments at S10 and S12 are NO, namely, when the designated table was not previously loaded and it cannot now be loaded, this signifies that the designated table does not exist. Therefore, the address of the default table is obtained at S13. Then, in the next process S14, this default table address is returned.

In selection process S1, as described above, the table address required for the multi-language conversion module process can be obtained. After carrying out process S1, multi-language conversion module process S2 is carried out. Multi-language conversion module process S2 performs language conversion by using the keyword and multi-language conversion table.

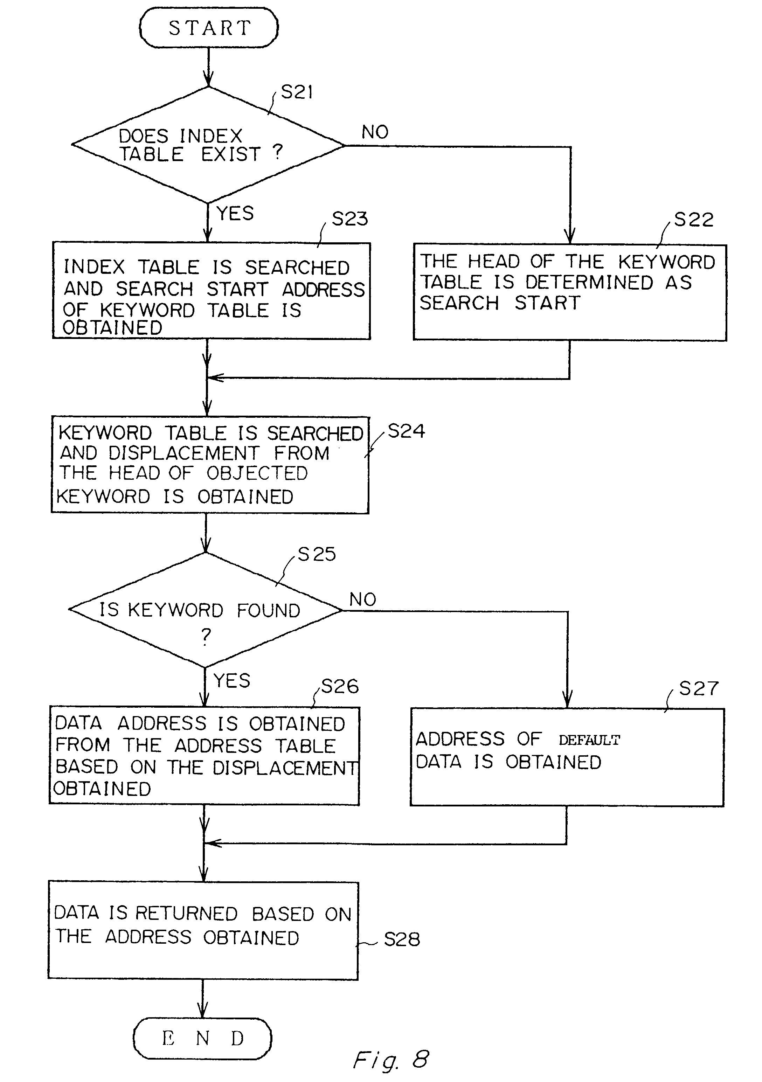

Figure 8 is a detailed flowchart of multi-language conversion module process S2. In the first step S21, it is judged whether or not an index table exists.

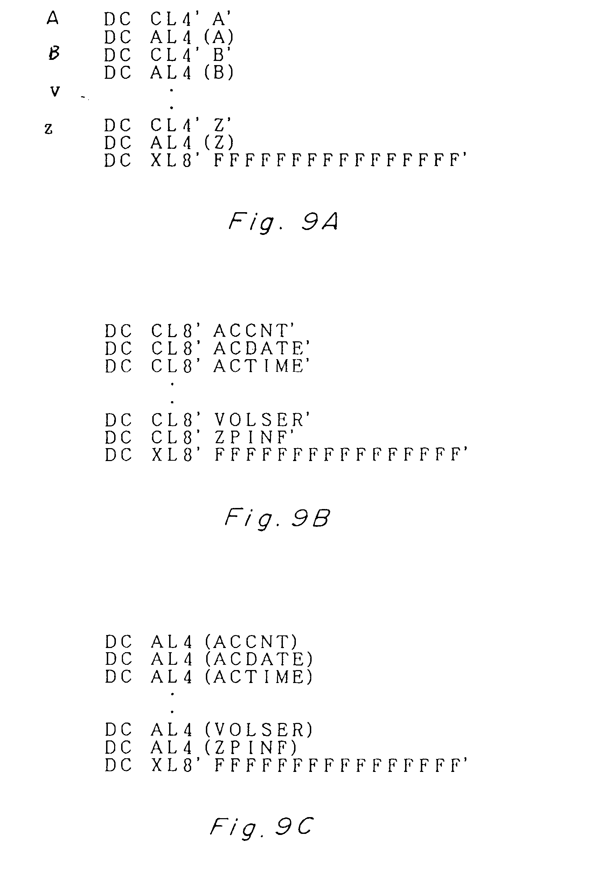

One embodiment of the present invention provides for a system in which the index table does not exist in keyword module 1 and instead the keyword table is sequentially searched. If the index table does not exist (NO) at S21, the head of the keyword table is determined as the search start address, the search being carried out at S22. If the index table does exist (YES), it is searched to obtain the search start address in the keyword table at S23. The index table stores the head character and a corresponding keyword address as shown in the index table of Figure 9A. Namely, for each head character, a first defined constant command (DC command) designates the head character (for example A) for a list of the keywords in the keyword table and a second DC command designates the head address in the keyword table at which the list concerned starts. CL4 represents a character of 4 bytes. In the index table shown in Figure 9A each entry (key) is represented by one character, for example the single character "A" is provided by the first DC command with 4 bytes. Thereafter, the address of label A is provided with 4 bytes by the second DC command AL4. The same arrangement is used for head characters B, C.... Each label A....V, Z is associated with a list of keywords and there is one label for each different head character. The addresses of these labels A to Z are shown in brackets in the index table diagram (Fig. 9A).

At step S23, the head address of A is obtained from the index table. After S23 is executed, the keyword table shown in Figure 9B is searched, starting from the head address stored in the index table for character A, and a displacement from the head address of the target keyword is obtained at S24. In the present embodiment, each entry in the keyword table occupies a unit of 8 bytes and the displacement address is obtained by multiplying a count value by 8. It is judged at S25 whether or not the keyword has been found by the search. When the keyword is not found (NO), the address of the default data is obtained at S26. If the keyword is found (YES), the address of the data in the data table is obtained from the address table shown in Figure 9C based on the obtained displacement in S24.

In the present embodiment, the successive addresses in the keyword table are 8 bytes apart but successive addresses in the address table are 4 bytes apart as shown in Figure 9C. The above displacement is used to obtain the number of bytes of the addresses in which the keyword exists and the required position in the address table can be thereafter obtained based on this number. For example, if a Japanese expression corresponding to the characters (keyword) ACTIME is to be obtained, and ACTIME is stored at the third position of the keyword table, then the address in the data table of the Japanese expression is obtained from the third position of the address table. In the present embodiment, an index table and a keyword table are provided as the keyword module. The address table and data table are provided as a multi-language data module for each language. In addition to 4 tables, a default data address is provided for each language. If it is judged at S25 that the keyword is not found at S25, then the address of the default data is obtained at S27. At S28, the data is returned based on the addresses obtained through steps S26 or S27. Thereafter, multi-language conversion module S2 is executed, thereby increasing the conversion speed.

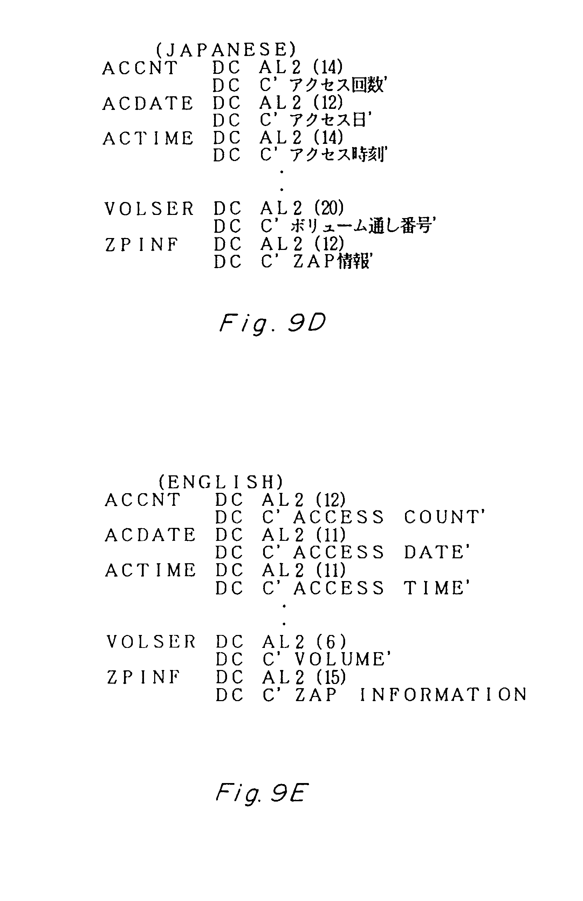

The above processing is explained in detail by referring to Figures 9D and 9E. Where the request for a display such as ACTIME is produced in the data processing apparatus, the head address A is obtained from the index table and ACTIME is sequentially searched from the head address to determine that "ACTIME" is the third keyword in the keyword table. Then by referring to the third position in the address table, the address in which the corresponding data is stored is obtained. From "ACTIME", "ACCESS TIME" is obtained in English and " 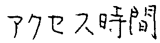 " is obtained in Japanese. The attributes of respective characters are also stored as information in the data table and can be used simultaneously in the display process in the data process apparatus. 8 FF's(H) are provided at the last positions in the index table 4, keyword table 3 and address table 6 to denote the last address. Therefore, when FF's(H) are detected during a search process the end of the table can be identified.

As described above, in apparatus embodying the present invention, a keyword module (index table, keyword table) and language data module (address table, data table) are provided for each individual language. Thus, it is possible to update the data conveniently because the updating process can be carried out for each individual language separately. When updating is not yet completed, an unupdated language data module returns default data. Thus, even for a table in which the updating process is deferred, unnecessary data is not displayed.

In an embodiment of the present invention, index table, keyword table and address table may be made common for individual languages whenever they are updated .

In addition to being used in a data processing apparatus as described above, the present invention can be used in any device in which the display requires conversion to different languages.

As explained in detail above, an embodiment of the present invention can provide a multi-language conversion process for converting a keyword recited in a data processing program into corresponding data in a designated language, in which process, even if a new keyword is added (in accordance with an expansion of the function of the program), an abnormal termination of the program, conventionally caused when no corresponding data is available, is avoided and normal operation is guaranteed with regard to the keywords already registered to that point. Further, without imparting a great burden, a new keyword can be added to the original position in the keyword table. Thus, such an embodiment of the present invention is extremely useful where the keyword name cannot be changed. Further, the problem of lowering of the conversion capability of keywords having predetermined (head) characters can also be solved.

## Claims

1. Multi-language conversion apparatus, for converting a received expression in an input language into a corresponding expression in a designated one of a plurality of available output languages, which apparatus includes:
multi-language conversion table means (15) having a keyword module (1) for storing a plurality of input-language expressions in a predetermined sequence, and also having, for each available output language, a data module for storing a plurality of expressions in the output language concerned, the order assigned to the expressions in the data module corresponding to the said predetermined sequence so that each input-language expression in the keyword module is associated with a corresponding output-language expression in the data module;
language selection means (16) for selecting that one of the data modules (2) which relates to the designated output language; and
conversion means (17) operable to determine whether or not the said received expression matches any of the input-language expressions stored in the said keyword module (1) and, if so, to retrieve from the selected data module (2) that one of the output-language expressions which corresponds to the input-language expression concerned;
characterised in that the multi-language conversion table means (15) have a conversion table unit (13-1, 13-2 .... 13-n) for each of the said available output languages, each such table unit including:
a keyword module (1) for storing such input-language expressions in such a predetermined sequence;
the said data module (2) for the output language concerned, the order assigned to the output-language expressions stored therein corresponding to the predetermined sequence of the input-language expressions in the keyword module (1) of the table unit concerned; and
a default data portion (14) for storing predetermined default data;
the said language selection means (16) being operable to select that one of the table units (13-1, 13-2 .... 13-n) which relates to the designated output language;
and the said conversion means (17) being operable to determine whether or not the said received expression matches any of the input-language expressions stored in the keyword module (1) of the selected table unit and, if so, to retrieve the corresponding output-language expression from the data module of the table unit concerned but, if no such match is found, to retrieve the said default data from the default data portion (14) of the table unit concerned.

2. Apparatus as claimed in claim 1, further comprising display means (20) for displaying the output-language expression, or the default data as the case may be, retrieved by the conversion means at a predetermined position on a display medium.

3. Apparatus as claimed in claim 1 or 2, wherein each keyword module (1) comprises:
a keyword table (3) for storing the said input-language expressions in the form of separate lists of expressions, there being such a list for each different head character; and
an index table (4) for storing, as index addresses, the addresses of the respective initial expressions in those lists.

4. Apparatus as claimed in claim 1, 2 or 3, wherein the data module (2) of each table unit comprises a data table (5) for storing the output-language expressions and an address table (6) for storing the respective addresses, in that data table, of the output-language expressions, the addresses being stored in the said predetermined sequence of the input-language expressions in the keyword module (1) of the table unit concerned.

5. Apparatus as claimed in any preceding claim, wherein said language selection means (16) are operable to retrieve the selected table unit and to store said selected table unit in a predetermined storage area; and
said conversion (17) means retrieve the output-language expression, or the default data as the case may be, from the table unit stored in the said predetermined storage area.

6. Apparatus as claimed in claim 2, wherein said default data (14) is a blank code for representing a blank on the display means.

7. Apparatus as claimed in any preceding claim, wherein the said conversion means (17) are operable to search the keyword module of the selected table unit to determine the position therein, if any, of the said received expression and to employ that determined position to identify the position in the said data module of the table unit concerned at which the corresponding output-language expression is stored.

8. Data processing apparatus, operable to execute a data processing program including expressions in a predetermined programming language, which apparatus includes multi-language conversion apparatus as claimed in any preceding claim having as its said input language the said programming language, and further includes means (11) for applying to the multi-language conversion apparatus a conversion request specifying an expression of the said program for conversion and also designating the said output language.

## Patentansprüche

1. Mehrsprachenkonvertierungsvorrichtung zum Konvertieren eines empfangenen Ausdruckes in einer Eingangssprache in einen entsprechenden Ausdruck in einer bezeichneten von einer Vielzahl von verfügbaren Ausgangssprachen, welche Vorrichtung enthält:
ein Mehrsprachenkonvertierungstabellenmittel (15) mit einem Schlüsselwortmodul (1), zum Speichern von einer Vielzahl von Eingangssprachausdrücken in einer vorbestimmten Folge, und für jede verfügbare Ausgangssprache auch mit einem Datenmodul zum Speichern von einer Vielzahl von Ausdrücken in der betreffenden Ausgangssprache, wobei die Reihenfolge, die den Ausdrücken in dem Datenmodul zugeteilt ist, der vorbestimmten Folge entspricht, so daß jeder Eingangssprachausdruck in dem Schlüsselwortmodul einem entsprechenden Ausgangssprachausdruck in dem Datenmodul zugeordnet ist;
ein Sprachselektionsmittel (16) zum Selektieren desjenigen der Datenmodule (2), der die bezeichnete Ausgangssprache betrifft; und
ein Konvertierungsmittel (17), das betriebsfähig ist, um zu bestimmen, ob der empfangene Ausdruck mit irgendeinem der Eingangssprachausdrücke übereinstimmt oder nicht, die in dem Schlüsselwortmodul (1) gespeichert sind, und, falls ja, um aus dem selektierten Datenmodul (2) denjenigen der Ausgangssprachausdrücke herauszusuchen, der dem betreffenden Eingangssprachausdruck entspricht;
dadurch gekennzeichnet, daß das Mehrsprachenkonvertierungstabellenmittel (15) eine Konvertierungstabelleneinheit (13-1, 13-2 ... 13-n) für jede der verfügbaren Ausgangssprachen hat, wobei jede solche Tabelleneinheit enthält:
einen Schlüsselwortmodul (1) zum Speichern solcher Eingangssprachausdrücke in solch einer vorbestimmten Folge;
den Datenmodul (2) für die entsprechende Ausgangssprache, wobei die Reihenfolge, die den Ausgangssprachausdrücken zugeteilt ist, die in ihm gespeichert sind, der vorbestimmten Folge der Eingangssprachausdrücke in dem Schlüsselwortmodul (1) der betreffenden Tabelleneinheit entspricht; und
einen Standarddatenabschnitt (14) zum Speichern von vorbestimmten Standarddaten;
welches Sprachselektionsmittel (16) betriebsfähig ist, um diejenige der Tabelleneinheiten (13-1, 13-2 ... 13-n) zu selektieren, die die bezeichnete Ausgangssprache betrifft;
und welches Konvertierungsmittel (17) betriebsfähig ist, um zu bestimmen, ob der empfangene Ausdruck mit irgendeinem der Eingangssprachausdrücke übereinstimmt oder nicht, die in dem Schlüsselwortmodul (1) der selektierten Tabelleneinheit gespeichert sind, und, falls ja, um den entsprechenden Ausgangssprachausdruck aus dem Datenmodul der betreffenden Tabelleneinheit herauszusuchen, aber, falls solch eine Übereinstimmung nicht gefunden wird, um die Standarddaten aus dem Standarddatenabschnitt (14) der betreffenden Tabelleneinheit herauszusuchen.

2. Vorrichtung nach Anspruch 1, ferner mit einem Anzeigemittel (20) zum Anzeigen des Ausgangssprachausdrukkes, oder der Standarddaten, je nachdem, der (die) durch das Konvertierungsmittel an einer vorbestimmten Position herausgesucht wurde(n), auf einem Anzeigemedium.

3. Vorrichtung nach Anspruch 1 oder 2, bei der jeder Schlüsselwortmodul (1) umfaßt:
eine Schlüsselworttabelle (3) zum Speichern der Eingangssprachausdrücke in der Form von separaten Listen von Ausdrücken, wobei solch eine Liste für jedes verschiedene Kopfzeichen existiert; und
eine Indextabelle (4) zum Speichern, als Indexadressen, der Adressen der jeweiligen Anfangsausdrücke in jenen Listen.

4. Vorrichtung nach Anspruch 1, 2 oder 3, bei der der Datenmodul (2) von jeder Tabelleneinheit eine Datentabelle (5) umfaßt, zum Speichern der Ausgangssprachausdrücke, und eine Adressentabelle (6), zum Speichern der jeweiligen Adressen, in welcher Datentabelle der Ausgangssprachausdrücke die Adressen in der vorbestimmten Folge der Eingangssprachausdrücke in dem Schlüsselwortmodul (1) der betreffenden Tabelleneinheit gespeichert sind.

5. Vorrichtung nach irgendeinem vorhergehenden Anspruch, bei der das Sprachselektionsmittel (16) betriebsfähig ist, um die selektierte Tabelleneinheit herauszusuchen und die selektierte Tabelleneinheit in einem vorbestimmten Speicherbereich zu speichern; und
das Konvertierungsmittel (17) den Ausgangssprachausdruck, oder die Standarddaten, je nachdem, aus der Tabelleneinheit heraussucht, die in dem vorbestimmten Speicherbereich gespeichert ist.

6. Vorrichtung nach Anspruch 2, bei der die Standarddaten (14) ein Leerzeichencode zum Darstellen eines Leerzeichens auf dem Anzeigemittel sind.

7. Vorrichtung nach irgendeinem vorhergehenden Anspruch, bei der das Konvertierungsmittel (17) betriebsfähig ist, um den Schlüsselwortmodul der selektierten Tabelleneinheit abzusuchen, um in ihm die Position des empfangenen Ausdruckes zu bestimmen, falls vorhanden, und jene bestimmte Position zu verwenden, um die Position in dem Datenmodul der betreffenden Tabelleneinheit zu identifizieren, an der der entsprechende Ausgangssprachausdruck gespeichert ist.

8. Datenverarbeitungsvorrichtung, die betriebsfähig ist, um ein Datenverarbeitungsprogramm auszuführen, das Ausdrücke in einer vorbestimmten Programmiersprache enthält, welche Vorrichtung eine Mehrsprachenkonvertierungsvorrichtung nach irgendeinem vorhergehenden Anspruch enthält, die als ihre Eingangssprache die Programmiersprache hat, und ferner ein Mittel (11) zum Anwenden einer Konvertierungsaufforderung auf die Mehrsprachenkonvertierungsvorrichtung enthält, die einen Ausdruck des Programms zur Konvertierung spezifiziert und auch die Ausgangssprache bezeichnet.

## Revendications

1. Dispositif de traduction d'une pluralité de langages, pour traduire une expression reçue dans un langage d'entrée en une expression correspondante dans l'un indiqué d'une pluralité de langages de sortie disponibles, ce dispositif comprenant:
un moyen à table de traduction d'une pluralité de langages (15) comportant un module de mots clés (1) pour stocker une pluralité d'expressions de langage d'entrée dans une séquence prédéterminée, et comportant également, pour chaque langage de sortie disponible, un module de données pour stocker une pluralité d'expressions dans le langage de sortie concerné, l'ordre attribué aux expressions dans le module de données correspondant à ladite séquence prédéterminée pour que chaque expression de langage d'entrée dans le module de mots clés soit associée à une expression de langage de sortie correspondante dans le module de données;
un moyen de sélection de langage (16) pour sélectionner celui des modules de données (2) qui concerne le langage de sortie indiqué; et,
un moyen de traduction (17) pouvant être mis en fonctionnement pour déterminer si ladite expression reçue correspond ou non à l'une des expressions de langage d'entrée stockées dans ledit module de mots clés (1) et, si c'est le cas, pour extraire du module de données (2) sélectionné celle des expressions de langage de sortie qui correspond à l'expression de langage d'entrée concernée;
caractérisé en ce que le moyen à table de traduction d'une pluralité de langages (15) comporte une unité de table de traduction (13-1, 13-2,..., 13-n) pour chacun desdits langages de sortie disponibles, chacune de ces unités de table incluant:
un module de mots clés (1) pour stocker ces expressions de langage d'entrée dans cette séquence prédéterminée;
ledit module de données (2) pour le langage de sortie concerné, l'ordre attribué aux expressions de langage de sortie qui y sont stockées correspondant à la séquence prédéterminée des expressions de langage d'entrée dans le module de mots clés (1) de l'unité de table concernée; et,
une partie de données implicites (14) pour stocker des données implicites prédéterminées;
ledit moyen de sélection de langage (16) pouvant être mis en fonctionnement pour sélectionner celle des unités de table (13-1, 13-2,..., 13-n) qui concerne le langage de sortie indiqué;
et ledit moyen de traduction (17) pouvant être mis en fonctionnement pour déterminer si ladite expression reçue correspond ou non à l'une des expressions de langage d'entrée stockées dans le module de mots clés (1) de l'unité de table sélectionnée et, si c'est le cas, pour extraire l'expression de langage de sortie correspondante du module de données de l'unité de table concernée mais, si cette correspondance n'est pas trouvée, pour extraire lesdites données implicites de la partie de données implicites (14) de l'unité de table concernée.

2. Dispositif selon la revendication 1, comprenant en outre un moyen de visualisation (20) pour visualiser l'expression de langage de sortie, ou les données implicites selon le cas, extraite par le moyen de traduction à une position prédéterminée sur un support de visualisation.

3. Dispositif selon la revendication 1 ou 2, dans lequel chaque module de mots clés (1) comprend:
une table de mots clés (3) pour stocker lesdites expressions de langage d'entrée sous la forme de listes d'expressions séparées, en ayant une de ces listes pour chaque caractère de tête différent; et,
une table d'index (4) pour stocker, comme adresses d'index, les adresses des expressions initiales respectives dans ces listes.

4. Dispositif selon la revendication 1, 2 ou 3, dans lequel le module de données (2) de chaque unité de table comprend une table de données (5) pour stocker les expressions de langage de sortie et une table d'adresses (6) pour stocker les adresses respectives, dans cette table de données, des expressions de langage de sortie, les adresses étant stockées dans ladite séquence prédéterminée des expressions de langage d'entrée dans le module de mots clés (1) de l'unité de table concernée.

5. Dispositif selon l'une quelconque des revendications précédentes, dans lequel ledit moyen de sélection de langage (16) peut être mis en fonctionnement pour extraire l'unité de table sélectionnée et pour stocker ladite unité de table sélectionnée dans une zone de mémoire prédéterminée; et,
ledit moyen de traduction (17) extrait l'expression de langage de sortie, ou les données implicites selon le cas, de l'unité de table stockée dans ladite zone de mémoire prédéterminée.

6. Dispositif selon la revendication 2, dans lequel lesdites données implicites (14) sont un code de blanc pour représenter un blanc sur le moyen de visualisation.

7. Dispositif selon l'une quelconque des revendications précédentes, dans lequel ledit moyen de traduction (17) peut être mis en fonctionnement pour rechercher le module de mots clés de l'unité de table sélectionnée afin d'y déterminer la position, éventuelle, de ladite expression reçue et d'utiliser cette position déterminée pour identifier la position dans ledit module de données de l'unité de table concernée où est stockée l'expression de langage de sortie correspondante.

8. Dispositif de traitement de données, pouvant être mis en fonctionnement pour exécuter un programme de traitement de données incluant des expressions dans un langage de programmation prédéterminé, ce dispositif incluant un dispositif de traduction d'une pluralité de langages ,selon l'une quelconque des revendications précédentes ,ayant comme dit langage d'entrée ledit langage de programmation, et incluant en outre un moyen (11) pour appliquer au dispositif de traduction d'une pluralité de langages une demande de traduction spécifiant une expression dudit programme pour une traduction et indiquant également ledit langage de sortie.
